(19) Europäisches Patentamt
European Patent Office
Office européen des brevets

(11) **EP 2 506 221 A2**

(12) **EUROPEAN PATENT APPLICATION**

(43) Date of publication:
**03.10.2012 Bulletin 2012/40**

(51) Int Cl.:
***G06T 19/00*** (2011.01)   ***G06T 11/00*** (2006.01)

(21) Application number: **12160617.2**

(22) Date of filing: **21.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.04.2011 JP 2011081994**

(71) Applicant: **Canon Kabushiki Kaisha Tokyo 146-8501 (JP)**

(72) Inventors:
• **Endo, Takaaki**
  **Ohta-ku, Tokyo (JP)**
• **Satoh, Kiyohide**
  **Ohta-ku, Tokyo (JP)**

(74) Representative: **Garner, Jonathan Charles Stapleton**
**Canon Europe Ltd**
**European Patent Department**
**3 The Square**
**Stockley Park**
**Uxbridge, Middlesex UB11 1ET (GB)**

(54) **Image processing apparatus, ultrasonic photographing system, image processing method, program, and storage medium**

(57)     An image processing apparatus includes ultrasonic image obtaining means (180) arranged to obtain an ultrasonic image by capturing a subject by ultrasound, generation means (118) arranged to generate a corresponding cross-sectional surface which corresponds to an image capturing cross-sectional surface of the ultrasonic image, which is parallel to a reference direction, and which includes a position specified in advance from a three-dimensional image of the subject, and cross-sectional image obtaining means (120) arranged to obtain a cross-sectional image of the three-dimensional image from the generated corresponding cross-sectional surface.

FIG. 8

EP 2 506 221 A2

## Description

BACKGROUND OF THE INVENTION

Field of the Invention

The present disclosure relates to an ultrasonic image and an image processing apparatus which displays a reference image of the ultrasonic image, an ultrasonic photographing apparatus, an image processing method, and a program.

Description of the Related Art

In a medical field or a field of nondestructive inspection, an image obtained by capturing an inspection target, such as a living body or other objects, is displayed in a monitor and a person who performs inspection observes the displayed image so that a lesion or a problem is detected. Most of such images are represented as tomography images (3D images) of insides of target objects. Examples of an image collection apparatus (modality) used to capture tomography images include an ultrasonic image diagnosis apparatus (ultrasonic apparatus), an optical coherence tomography meter (OCT apparatus), a magnetic resonance imaging scanner (MRI apparatus), and an X-ray computer tomography apparatus (X-ray CT apparatus).

Image capturing of a lesion portion performed by the ultrasonic apparatus is supported by displaying a cross-sectional image such as an MRI image corresponding to an ultrasonic tomography image, inspection performed by comparing a plurality of images with each other is enabled. In Japanese Patent Laid-Open No. 2003-260056, in an ultrasonic photographing apparatus used to capture an image of a human body, when ultrasonic scanning is performed using an ultrasonic probe in a cross-sectional surface which is orthogonal to a body axis, a cross-sectional image of 3D image data corresponding to an ultrasonic image is displayed as a reference image. Furthermore, the reference image is normally displayed such that a direction from the dorsal to the ventral side corresponds to an upward direction under the constraint described above even when the ultrasonic probe is inclined when the image is captured.

In the inspection, a specific position corresponding to a lesion or a problem is recognized, and thereafter, the positional relationship between the specific position and the inspection target is recognized. By this, a detailed inspection is enabled.

However, if the specific position is not viewed in the ultrasonic image and the reference image due to a change of an ultrasonic image-pickup position, it becomes difficult to recognize the specific position and a large burden is required to search for the specific position.

In addition, when a direction of the reference image coincides with a direction of an ultrasonic image-pickup cross-sectional surface, it is difficult to recognize a photographing position for an entire inspection target from the images.

SUMMARY OF THE INVENTION

The present invention in its first aspect provides an image processing apparatus as specified in claims 1 to 12.

The present invention in its second aspect provides an ultrasonic photographing system as specified in claim 13.

The present invention in its third aspect provides an image processing method as specified in claim 14.

The present invention in its fifth aspect provides a program as specified in claims 15 and 16. The present invention in its sixth aspect provides a storage medium as specified in claim 17.

Further features of the present invention will become apparent from the following description of exemplary embodiments with reference to the attached drawings.

BRIEF DESCRIPTION OF THE DRAWINGS

Fig. 1 is a diagram illustrating a configuration of an image processing apparatus according to a first embodiment.

Fig. 2 is a diagram illustrating a hardware configuration of the image processing apparatus.

Fig. 3 is a flowchart illustrating an entire processing procedure according to the first embodiment.

Fig. 4 is a diagram illustrating a state in which an ultrasonic tomography image of a breast in a supine posture is captured.

Fig. 5 is a diagram illustrating the ultrasonic tomography image.

Fig. 6 is a diagram illustrating an MRI image.

Fig. 7 is a diagram schematically illustrating a process of generating a cross-sectional image corresponding to the ultrasonic tomography image from the MRI image.

Fig. 8 is a diagram illustrating a screen displayed in a display unit under control of a display controller.

DESCRIPTION OF THE EMBODIMENTS

Hereinafter, embodiments of the present invention will be described with reference to the accompanying drawings.

First Embodiment

In a first embodiment, an obtainment of a cross-sectional image from a 3D image photographed in a body posture which is different from a body posture of an ultrasonic image is described as an example. In this example, a reference direction corresponds to a direction of gravitational force.

An image processing system according to this embodiment will now be described.

Note that, although a term "photographing" and a term "image capturing" have the same meaning in this embodiment, the term "photographing" is used when a series of processes including a process of setting conditions to a process of obtaining an image is emphasized whereas the term "image capturing" is used when an obtainment of an image is particularly emphasized.

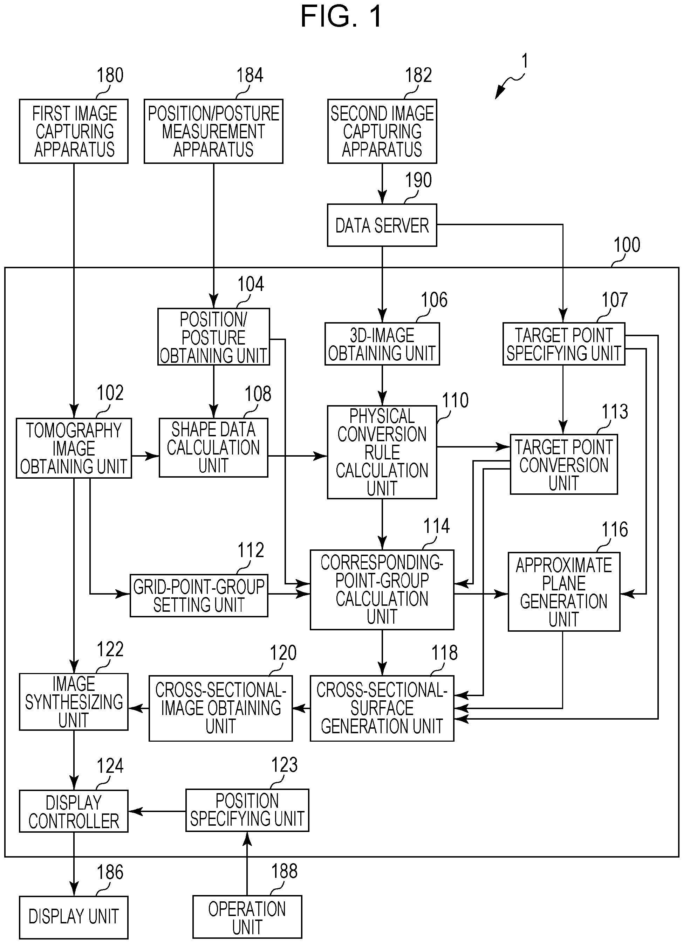

Fig. 1 illustrates a configuration of an image diagnosis system 1 according to this embodiment. As shown in Fig. 1, an image processing apparatus 100 of this embodiment is connected to a first image capturing apparatus 180, a data server 190, a display unit 186, and an operation unit 188.

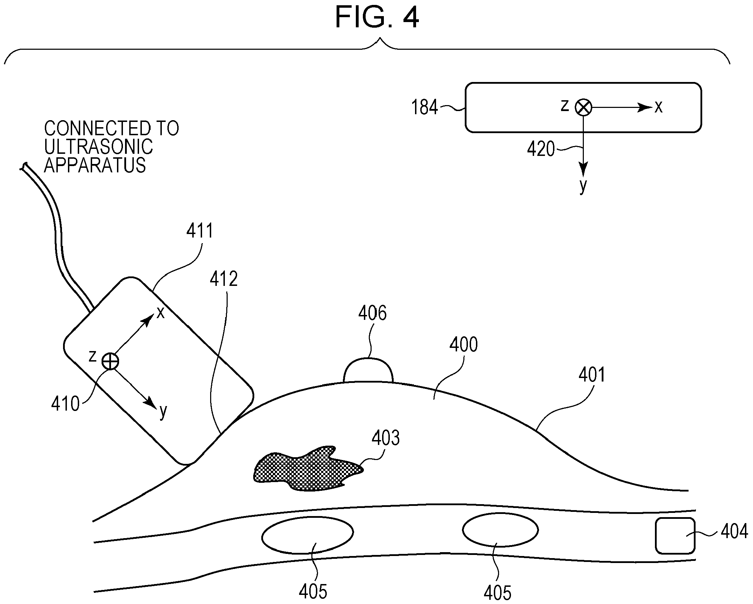

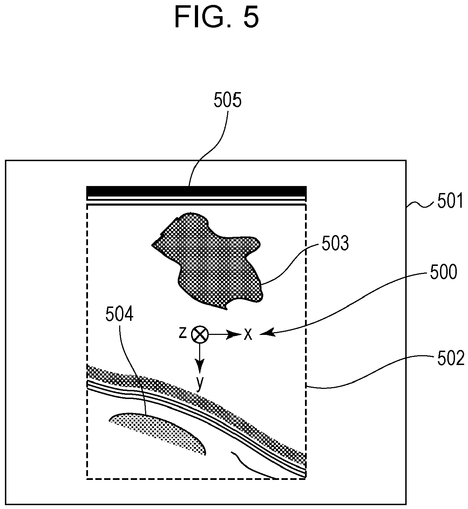

An ultrasonic image capturing apparatus is used as the first image capturing apparatus 180 and transmits and receives an ultrasonic signal through a probe to thereby capture an image of a test body. By this image capturing, an ultrasonic image or an ultrasonic tomography image is obtained. The term "tomography image" is particularly used when a fact that the image represents an internal configuration of the test body is emphasized. Fig. 4 is a diagram illustrating a state in which an ultrasonic tomography image of a breast is captured in a supine posture using the first image capturing apparatus 180. Fig. 5 is a diagram illustrating the ultrasonic tomography image. An ultrasonic tomography image 501 obtained by bringing a probe 411 into contact with a breast surface 401 in the supine posture is successively input to the image processing apparatus 100 through a tomography image obtaining unit (ultrasonic image obtaining unit) 102.

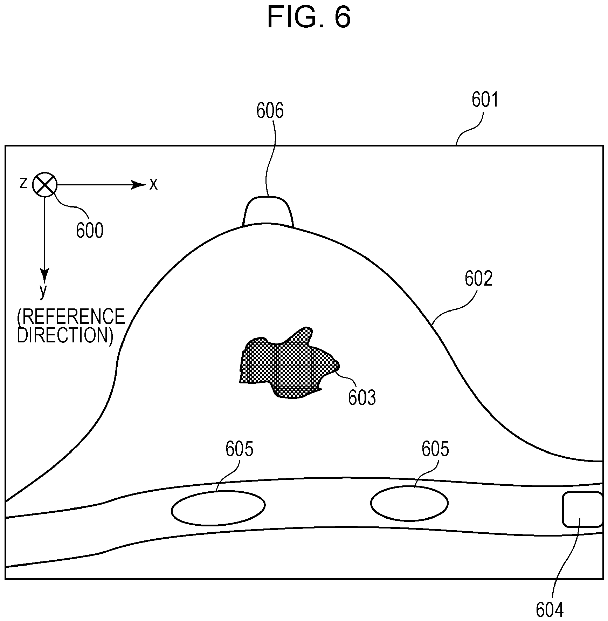

It is assumed that the data server 190 stores an MRI image obtained by capturing an image of a breast of a subject who is in a prone posture using an MRI apparatus serving as a second image capturing apparatus 182 and further stores a center position of a target lesion region in the MRI image. Fig. 6 is a diagram illustrating the MRI image. An MRI image 601 stored in the data server 190 is supplied to the image processing apparatus 100 through a 3D-image obtaining unit 106. Furthermore, a center position (hereinafter referred to as a "lesion position") of a target lesion region 603 stored in the data server 190 is supplied to the image processing apparatus 100 through a target point specifying unit 107.

A position/posture measurement apparatus 184 measures a position and posture of a probe 411 included in the ultrasonic apparatus serving as the first image capturing apparatus 180. The position/posture measurement apparatus 184 is configured by the FASTRAK of Polhemus, USA, or the like and measures a position and posture of the probe 411 in a sensor coordinate system 420 (which is defined by the position/posture measurement apparatus 184 as a reference coordinate system). Note that the position/posture measurement apparatus 184 may be configured in an arbitrary manner as long as the position/posture measurement apparatus 184 can measure a position and posture of the probe 411. A measured position and posture of the probe 411 is successively supplied to the image processing apparatus 100 through a position/posture obtaining unit 104.

The image processing apparatus 100 includes the following components.

The tomography image obtaining unit 102 successively obtains the ultrasonic tomography image 501 which is successively captured in a predetermined frame rate and supplied to the image processing apparatus 100. The tomography image obtaining unit 102 transmits the ultrasonic tomography image 501 to a shape data calculation unit 108, a grid-point-group setting unit 112, and an image synthesizing unit 122.

The position/posture obtaining unit 104 successively obtains a position and posture of the probe 411 to be supplied to the image processing apparatus 100 and transmits the position and posture to the shape data calculation unit 108 and a corresponding-point-group calculation unit 114.

The 3D-image obtaining unit 106 obtains the 3D MRI image 601 which is obtained by capturing an image of the subject in the prone posture and which is input to the image processing apparatus 100 and supplies the 3D MRI image 601 to a physical conversion rule calculation unit 110. Note that the 3D MRI image may be 3D volume data of the subject obtained from an MRI image or may be a 2D MRI cross-sectional image group.

The target point specifying unit 107 specifies in advance a lesion position detected in the MRI image 601 which is captured in the prone posture and which is input to the image processing apparatus 100 as a position of a target point and supplies information on the target point position to a target point conversion unit 113, an approximate plane generation unit 116, and a cross-sectional-surface generation unit 118. Note that such specifying of the position is performed by the operation unit 188, for example. Furthermore, "to specify in advance" means that the specifying has been completed before a corresponding cross-sectional surface, which will be described hereinafter, is generated.

The shape data calculation unit 108 calculates shape data of a breast 400 in a supine posture in accordance with the ultrasonic tomography image 501 and the position and posture of the probe 411 and supplies the shape data to the physical conversion rule calculation unit 110.

The physical conversion rule calculation unit 110 calculates a physical conversion rule for converting a shape of a breast surface 401 in the supine posture into a shape which is substantially the same as a shape of a surface 602 of the MRI image in the prone posture and supplies the physical conversion rule to the target point conversion unit 113 and the corresponding-point-group calculation unit 114.

The grid-point-group setting unit 112 sets a group of grid points in a range represented by the ultrasonic tomography image 501 and supplies information on the grid point group to the corresponding-point-group calculation unit 114.

The target point conversion unit 113 converts the lesion position specified in the MRI image 601 in the prone posture into a position in the supine posture in accordance with the physical conversion rule and supplies the converted position to the corresponding-point-group calculation unit 114 and the cross-sectional-surface generation unit 118.

The corresponding-point-group calculation unit 114 calculates a corresponding point group by shifting positions of grid points in accordance with the physical conversion rule and supplies information on the corresponding point group to the approximate plane generation unit 116 and the cross-sectional-surface generation unit 118. The approximate plane generation unit 116 and the cross-sectional-surface generation unit 118 generate a corresponding cross-sectional surface corresponding to the ultrasonic image. Here, the corresponding cross-sectional surface is a plane obtained by performing predetermined conversion on an image-capturing cross-sectional surface (photographing cross-sectional surface) which is a plane including a 2D ultrasonic image and is a cross-sectional surface used to obtain a 2D MRI sectional image of the plane from the 3D MRI image. The term "corresponding" means that a position and posture of an ultrasonic image obtained under a certain constraint and a position and posture of a corresponding cross-sectional plane obtained under another constraint coincide with each other. For example, when a cross-sectional surface of a 3D image corresponding to an ultrasonic image is simply referred to, a cross-sectional surface which is in the same position and the same inclination as a cross-sectional surface including the ultrasonic image is meant. However, the corresponding cross-sectional surface of this embodiment is not simple correspondence but is fixed in a specific position and fixed in a direction parallel to the reference direction.

The approximate plane generation unit 116 calculates a plane which includes the lesion position and which approximates the corresponding point group, and supplies information on the plane to the cross-sectional-surface generation unit 118.

The cross-sectional-surface generation unit 118 calculates a replaced cross-sectional surface obtained by replacing a number of posture parameters of an approximated plane by fixed values and generates a corresponding cross-sectional surface by estimating in-plane moving components. Thereafter, the cross-sectional-surface generation unit 118 supplies information on the corresponding cross-sectional surface to a cross-sectional-image obtaining unit 120. By this, the corresponding cross-sectional surface which is parallel to the reference direction, which passes the position specified by the target point specifying unit 107 in advance, and which has a line which intersects with a plane including the ultrasonic image and which is orthogonal to the reference direction may be obtained. In addition, the corresponding cross-sectional surface is parallel to a plane obtained by replacing an angle defined by the image capturing cross-sectional surface of the ultrasonic image and the reference direction by 0 degree and passes the position specified by the target point specifying unit 107 in advance.

Here, it is assumed that an angle defined by the corresponding cross-sectional surface and the reference direction means the minimum angle defined by an arbitrary line which is parallel to the reference direction and the corresponding cross-sectional surface. Furthermore, the replacement process performed here means a process of projecting the image capturing cross-sectional surface onto a plane which is parallel to the reference direction and which is orthogonal to a line which forms an angle defined by the reference direction and the image capturing cross-sectional surface.

The cross-sectional-image obtaining unit 120 obtains a cross-sectional image by extracting a predetermined range in the calculated cross-sectional surface from the 3D image of the subject. The cross-sectional-image obtaining unit 120 supplies the obtained cross-sectional image to the image synthesizing unit 122.

The image synthesizing unit 122 synthesizes the ultrasonic tomography image and the sectional image with each other so as to obtain an image to be displayed. A display controller 124 controls a monitor 206 so that the monitor 206 displays the image.

For example, in a field of the mammary gland department, image diagnosis may be performed in the following order: a position of a lesion portion is identified in an image obtained by capturing a breast using an MRI apparatus, and thereafter, a state of the portion is captured by an ultrasonic apparatus for observation. Here, in a general photographing protocol in the mammary gland department, image capturing using an MRI apparatus is performed in a prone posture and image capturing using an ultrasonic apparatus is performed in a supine posture in many cases. In this case, a doctor estimates a position of the lesion portion in the supine posture from the position of the lesion portion identified in the MRI image captured in the prone posture taking deformation of the breast caused by a difference of a photographing posture into consideration and thereafter captures the estimated position of the lesion portion using the ultrasonic apparatus.

However, since the deformation of the breast caused by a difference of a photographing posture is considerably large, the position of the lesion portion in the supine posture which is estimated by the doctor may be considerably different from an actual position. To address this problem, a general method for generating a virtual supine-posture MRI image by performing a deformation process on a prone-posture MRI image may be used. A position of the lesion portion in the virtual supine-posture MRI image may be calculated in accordance with information on deformation from the prone posture to the supine posture. Alternatively, the position of the lesion portion in the image may be directly obtained by performing interpretation of the generated virtual supine-posture MRI image. If the accuracy of the deformation process is high, the actual lesion portion in the supine posture exists in the vicinity of the lesion portion in the virtual supine-posture MRI image.

Therefore, in the image diagnosis system 1, a cross-sectional surface including the target position is set in accordance with the ultrasonic tomography image obtained by capturing the target object in a first physical deformation state, the reference direction in the 3D image obtained by capturing the target object in a second physical deformation state, and the target position included in the 3D image. Then an image of the set cross-sectional surface is extracted from the 3D image so as to be displayed with the ultrasonic tomography image in an array. By this, the positional relationship between the image of the cross-sectional surface of the 3D image and the target object can be easily recognized while a search for the position in the ultrasonic tomography image corresponding to the target position in the 3D image is facilitated. In this embodiment, a case where the breast of the subject is set as the target object and the MRI image obtained by capturing the breast in the prone posture using the MRI apparatus is used as the 3D image is described as an example. Furthermore, in this embodiment, a case where the direction of gravitational force obtained when the MRI image is captured is set as the reference direction and the center position in the target lesion region included in the MRI image is set as the target position is described as an example. Moreover, in this embodiment, it is assumed that the target object is in the state of the supine posture relative to the direction of gravitational force in the first physical deformation state and is in the state of the prone posture relative to the direction of gravitational force in the second physical deformation state.

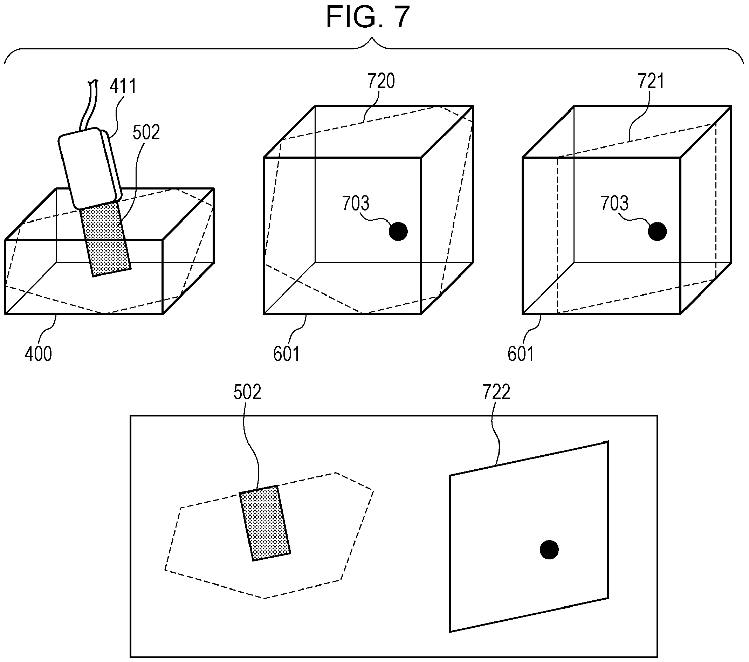

An outline of a process realized by the image processing system described above will be described with reference to Fig. 7. In this process, in order to perform positioning of the MRI image and the ultrasonic tomography image, the ultrasonic tomography image and the cross-sectional image generated from the MRI image corresponding to the ultrasonic tomography image are synthesized with each other and a resultant image is displayed in the monitor 206. In an upper left portion in Fig. 7, a cube representing the target object (breast) in the supine posture and the probe 411 are shown. Furthermore, in an upper central portion in Fig. 7, a plane 720 which approximates a sectional surface (curved surface) calculated in accordance with the ultrasonic tomography image and the lesion position is represented by a dotted line. In an upper right portion in Fig. 7, a replaced cross-sectional surface 721 obtained by replacing a tilt angle (pitch angle) by 0 is represented by a dotted line. In a lower portion in Fig. 7, a display state of the obtained ultrasonic tomography image 501 and a sectional image 722 generated from the MRI image 601 in the prone posture is shown.

Note that the tilt angle or the pitch angle means an incident angle of an image-capturing cross-sectional surface of an ultrasonic image in a position on a body surface to which the ultrasonic probe contacts. In addition, an azimuth angle is defined by a direction of the ultrasonic probe obtained when the ultrasonic probe orthogonally contacts to the body surface. Although an azimuth angle of the captured ultrasonic image and an azimuth angle of the obtained 2D MRI cross-sectional image coincide with each other, tilt angles thereof do not coincide with each other.

An operator (a doctor or a technician) presses the probe 411 on a target object 400 so as to obtain the ultrasonic tomography image 501 of the target object 400 in the supine posture. In the upper left portion in Fig. 7, a capturing image region 502 of the ultrasonic tomography image 501 is represented by a solid line and a plane including the capturing image region 502 is represented by a dotted line. The capturing image region 502 is included in the image-capturing cross-sectional surface obtained by the probe 411. Since a position and posture of the probe 411 is measured by the position/posture measurement apparatus 184, information on a position and posture of the ultrasonic tomography image 501 relative to the target object 400 can be obtained. Since the first image capturing apparatus 180 captures different images every time the position and posture of the probe 411 is changed, a corresponding cross-sectional surface may be changed by the approximate plane generation unit 116 and the cross-sectional-surface generation unit 118. In this case, a direction of the corresponding cross-sectional surface fixed by the reference direction and the specified position is changed to a rotation direction having an axis in a recumbent posture reference direction in accordance with a direction of the image-capturing cross-sectional surface of the ultrasonic image.

By this, since a tilt angle of the corresponding cross-sectional surface is fixed whereas an azimuth angle of the corresponding cross-sectional surface is changed in accordance with an azimuth angle of the ultrasonic probe 411, an image which can be easily compared with the ultrasonic image can be obtained.

On the other hand, in the MRI image 601 in the prone posture, a center position (lesion position) 703 included in the target lesion region 603 is specified. The operator searches the ultrasonic tomography image 501 obtained by capturing the target object in the supine posture by operating the probe 411 for a lesion region corresponding to the target lesion region 603 with reference to the cross-sectional image 722 including the lesion position 703 specified in the MRI image 601 in the prone posture.

When receiving the position and posture of the ultrasonic tomography image 501 and the lesion position 703, the image processing system described above generates the sectional image 722 from the MRI image 601 in accordance with the information. First, a plane including the lesion position which is converted into that in the supine posture is obtained in a posture the same as that of the ultrasonic tomography image 501. Next, a cross-sectional surface (curved surface) which is included in the MRI image 601 and which corresponds to the calculated plane is obtained, and a plane 720 including the lesion position 703 is obtained by approximating the curved surface. Here, since the physical deformation state obtained when the ultrasonic tomography image 501 is captured and the physical deformation state obtained when the MRI image 601 is captured are considerably different from each other, the posture of the plane 720 may be considerably different from the posture of the ultrasonic tomography image 501. Therefore, it is not easy to recognize the positional relationship between the plane 720 and the target object. Accordingly, in this embodiment, the sectional image 722 including the lesion position 703 is calculated by replacing a tilt angle (pitch angle) of the approximate plane 720 by 0. In the sectional image 722, a direction of gravitational force corresponds to a downward direction in a screen. Through the process described above, the sectional image 722 which includes the lesion position 703 and which has the direction of gravitational force corresponding to the downward direction in the screen may be displayed irrespective of the posture of the probe 411. As a result, the search for the lesion region in the ultrasonic tomography image which corresponds to the target lesion region can be facilitated. Furthermore, since the direction of the cross-sectional image can be recognized in advance, the doctor may easily recognize the positional relationship between the cross-sectional image and the target object. Furthermore, since the position in the cross-sectional image can be represented by a simple line in a body mark representing a simple shape of the breast, the positional relationship between the position and the target object (breast in the prone posture) can be easily recognized.

The sectional image 722 of the generated MRI image and the ultrasonic tomography image 501 (specifically, the capturing image region 502) are individually displayed in the monitor 206. The operator can perform positioning by determining whether the target lesion regions included in the respective images coincide with each other while a position in which the probe 411 abuts is changed.

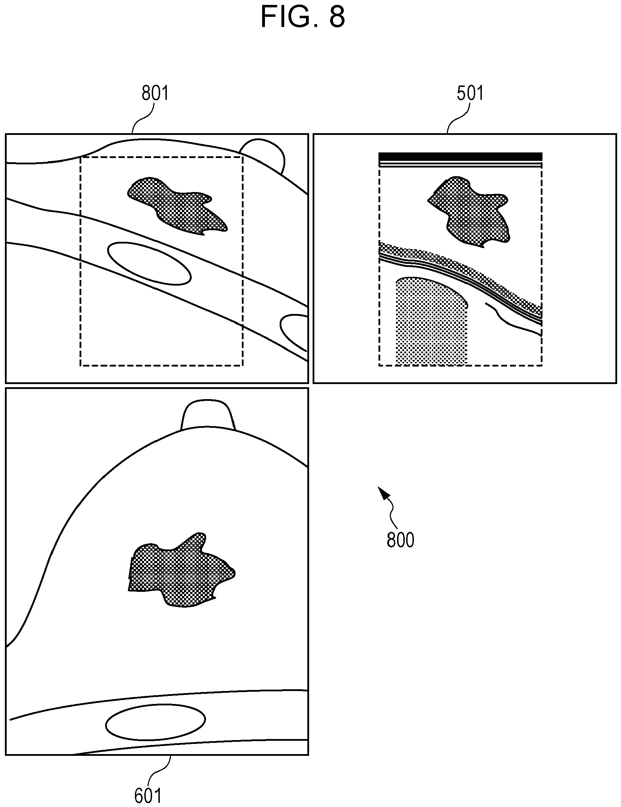

Fig. 8 is a diagram illustrating an image obtained by synthesizing the ultrasonic tomography image and the cross-sectional image with each other. In an upper right portion in Fig. 8, the ultrasonic tomography image 501 is shown. Furthermore, in an upper left portion in Fig. 8, the cross-sectional image (first MRI sectional image) which includes the lesion position and which is obtained from a 3D MRI image obtained by converting the 3D MRI image of the subject in the prone posture into a 3D MRI image of the subject in the supine posture is shown. This MRI image is the cross-sectional image (first MRI sectional image) of the corresponding cross-sectional surface which is parallel to the image-capturing sectional surface of the ultrasonic image and which includes the specified lesion position. In a lower left portion in Fig. 8, an MRI image in the prone posture is shown. The MRI image of the prone posture shows a cross-sectional surface including the lesion position and also shows an image (second MRI sectional image) obtained by replacing the tilt angle (pitch angle) by 0.

The ultrasonic tomography image 501 in the upper right portion in Fig. 8 and a supine-posture MRI sectional image 801 in an upper left portion in Fig. 8 are both cross-sectional images of the target object in the supine posture. By this, the doctor can easily search the ultrasonic tomography image for the lesion region while easily recognizing the relationship between internal tissue structures of the two sectional images. On the other hand, the MRI image 601 in the prone posture in the lower left portion in Fig. 8 is not so different from the ultrasonic tomography image 501 in the upper right portion in Fig. 8 in terms of the posture, and a direction of gravitational force normally corresponds to a downward direction in the screen. Therefore, the doctor can recognize the relationship between the two sectional images and easily recognize the positional relationship between the target object in the prone posture and the sectional image. Accordingly, the doctor can recognize the positional relationship between the target object in the prone posture and the sectional image in accordance with the three tomography images shown in Fig. 8 and can easily search the ultrasonic tomography image in the supine posture for the lesion region.

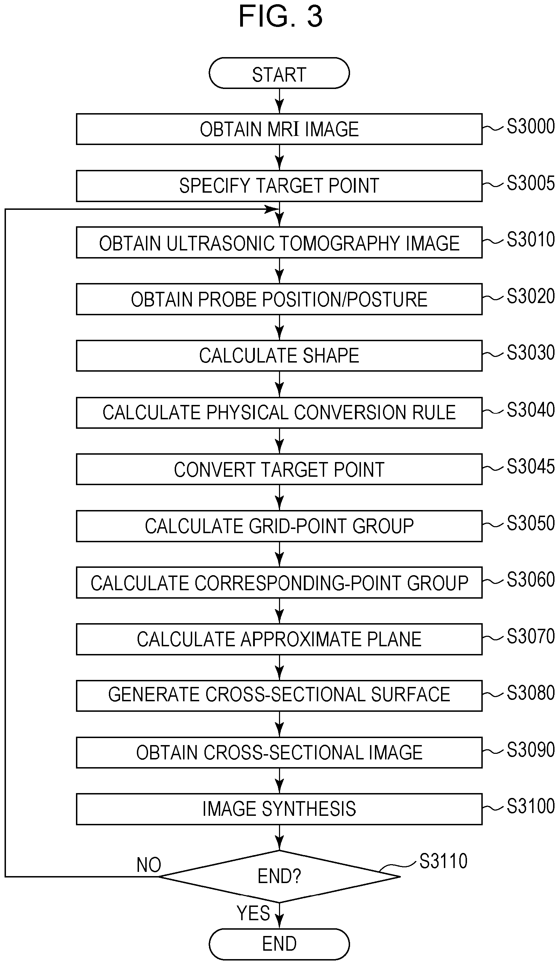

Fig. 3 is a flowchart illustrating an entire procedure of a process performed by the image processing apparatus 100.

(S3000) Obtainment of MRI Image

In step S3000, the image processing apparatus 100 obtains the MRI image 601 of the breast in the prone posture which is supplied from the data server 190 to the image processing apparatus 100 as a process performed by the 3D-image obtaining unit 106. In this embodiment, an MRI coordinate system 600 is defined. The MRI coordinate system 600 has an origin corresponding to a certain point included in the MRI image 601, an X axis corresponding to an axis representing a direction from right to left of a human body, a Y axis corresponding to an axis representing a direction from an ventral side to a dorsal side of the human body, and a Z axis corresponding to an axis representing a direction from feet to a head of the human body. In addition, a direction of the Y axis of the MRI coordinate system 600 (a direction of gravitational force) is determined as a reference direction. Note that the reference direction may be a positive direction or a negative direction of the Y axis in this embodiment.

(S3005) Obtainment of Target Point

In step S3005, the image processing apparatus 100 obtains a center position xsL (lesion position 703) of the target lesion region 603 included in the MRI image 601 in the prone posture which is supplied from the data server 190 to the image processing apparatus 100 as a process performed by the target point specifying unit 107.

(S3010) Obtainment of Ultrasonic Tomography Image

In step S3010, the image processing apparatus 100 obtains the ultrasonic tomography image 501 which is successively supplied from the first image capturing apparatus 180 to the image processing apparatus 100 as a process performed by the tomography image obtaining unit 102. It is assumed that positions of pixels of the ultrasonic tomography image 501 are represented by an ultrasonic image coordinate system 500 (which is defined as a coordinate system having an XY plane corresponding to a plane representing the ultrasonic tomography image and a Z axis corresponding to an axis which is orthogonal to the XY plane). In this embodiment, a center position of the ultrasonic tomography image 501 is determined as an origin of the ultrasonic image coordinate system 500. Note that the positions of the pixels of the ultrasonic tomography image 501 are included only in a plane which satisfies the following equation: Z = 0.

(S3020) Obtainment of Probe Position and Posture

In step S3020, the image processing apparatus 100 obtains the position and posture of the probe 411 which is successively supplied from the position/posture measurement apparatus 184 to the image processing apparatus 100 as a process performed by the position/posture obtaining unit 104.

(S3030) Calculation of Shape

In step S3030, the image processing apparatus 100 obtains a breast shape in the supine posture as a process performed by the shape data calculation unit 108. Specifically, position coordinate vectors are obtained at a time when the operator operates the probe such that a center portion 412 of a tip of the probe contacts to a plurality of portions in the breast surface 401 in the supine posture. The breast shape in the supine posture is represented as a group of the position coordinate vectors.

(S3040) Calculation of Physical Conversion Rule

In step S3040, the image processing apparatus 100 calculates a physical conversion rule for converting the breast shape in the supine posture into a breast shape substantially coincide with a breast shape in the prone posture as a process performed by the physical conversion rule calculation unit 110. First, a conversion matrix of four rows and four columns which represents a rule of rigid body conversion from the breast in the supine posture to the breast in the prone posture is calculated in accordance with a rigid body portion of the breast in the supine posture (a rib bone 504 in the ultrasonic tomography image 501, for example) and rigid body portions of the breast in the prone posture (rib bones 605 included in the MRI image 601). For this calculation, a general method such as the iterative closest point method (ICP method) may be used. Next, a nonrigid body conversion rule for converting the breast shape in the supine posture into a breast shape which substantially coincides with the breast shape in the prone posture taking physical deformation into consideration is calculated. The nonrigid body conversion rule is represented by a group of 3D displacement vectors which represent amounts of movements of grid points (which are intersections obtained by dividing a square region including the entire breast 400 in the supine posture into a grid) included in the MRI coordinate system 600 caused by the conversion from the grid points in the supine posture to those in the prone posture. Furthermore, a group of 3D reversed displacement vectors which represent amounts of movements caused by conversion from the prone posture to the supine posture is also calculated. Note that, for the calculation of the nonrigid body conversion rule, a method based on a gravitational deformation simulation disclosed in Y. Hu, D. Morgan, H. U. Ahmed, D. Pendse, M. Sahu, C. Allen, M. Emberton and D. Hawkes, "A statistical motion model based on biomechanical simulations,"proc. miccai 2008, Part I, LNCS 5241, pp. 737-744, 2008 may be used. The physical conversion rule from the prone posture to the supine posture in this embodiment includes the rigid body conversion rule and the nonrigid body conversion rule. Furthermore, the image processing apparatus 100 calculates a conversion matrix Tis which is used to convert the ultrasonic image coordinate system 500 into the MRI coordinate system 600 in accordance with the position and posture of the probe 411 and the rule of the rigid body conversion from the breast in the supine posture to the breast in the prone posture. This conversion matrix represents a position and posture of the ultrasonic tomography image 501 in the MRI coordinate system 600.

(S3045) Conversion of Target Point

In step S3045, the image processing apparatus 100 performs the following process as a process performed by the target point conversion unit 113. Specifically, a lesion position xsL' in the supine posture is calculated by displacing the center position xsL representing the lesion position 703 in the MRI image 601 in the prone posture in accordance with the 3D reversed displacement vector group calculated in step S3040 so that the prone posture is converted into the supine posture.

(S3050) Setting of Grid Point Group

In step S3050, the image processing apparatus 100 first divides a rectangular region representing a range of the ultrasonic tomography image 501 into a grid shape having equal intervals and sets a group of intersections of the grid as a group of grid points (not shown) as a process performed by the grid-point-group setting unit 112. It is assumed that the grid points at least include the origin of the ultrasonic image coordinate system 500 and four vertices ((-Xmin, -Ymin), (Xmin, -Ymin), (-Xmin, Ymin), and (Xmin, Ymin)) of the rectangular region representing the range of the ultrasonic tomography image 501. In addition, it is assumed that the grid points further include terminal points ((-Xmin, 0), (Xmin, 0), (0, -Ymin), and (0, Ymin)) of the X axis and the Y axis.

(S3060) Calculation of Corresponding Point Group

In step S3060, first, the image processing apparatus 100 shifts all the grid points set in step S3050 by the same distance in the Z axis direction so that positions of the grid points and the lesion position are located on the same plane as a process performed by the corresponding-point-group calculation unit 114. Thereafter, the image processing apparatus 100 converts the positions of the grid points in the supine posture into positions of the grid points in the prone posture in accordance with the physical conversion rule so as to obtain a corresponding point group. Hereinafter, a detailed process in this step will be described.

First, a lesion position xiL in the ultrasonic image coordinate system 500 is obtained by the following expression in accordance with the lesion position xsL' obtained by converting the lesion position xsL into that in the supine posture and the conversion matrix Tis used to convert the ultrasonic image coordinate system 500 into the MRI coordinate system 600.

$$xiL = xsL' \cdot Tis \, -1 \qquad (1)$$

Next, z coordinates of all the grid points set in step S3050 are set as z coordinate values of the lesion position xiL in the ultrasonic image coordinate system 500. Positions of the grid points obtained by this correspond to positions of the grid points set when the probe 411 is virtually subjected to parallel shift to the lesion position while the posture of the probe 411 is maintained. Then, positions of the grid points in the MRI coordinate system 600 are obtained by the following equation.

$$xsn = xin \cdot Tis \qquad (2)$$

Here, an expression "xin = [xin yin ziL 1]T" represents a homogeneous coordinate expression in a 3D space in a position of an n-th grid point (n = 1 to N: N is a total number of the grid points) in the ultrasonic image coordinate system 500. Here, "ziL" represents a z coordinate value of the lesion position xiL in the ultrasonic image coordinate system 500. Furthermore, an expression "xsn = [xsn ysn zsn 1]T represents a position of an n-th grid point in the MRI coordinate system 600.

Then, the obtained positions xsn of the grid points are subjected to physical conversion in accordance with the 3D displacement vector group obtained in step S3040 so that positions xdn (n = 1 to N) of a group of points (a group of corresponding points) included in the MRI image 601 in the prone posture which correspond to the positions obtained after the conversion of the group of the grid points are obtained. Note that since a physical deformation state obtained when the ultrasonic tomography image 501 is captured and a physical deformation state obtained when the MRI image 601 is captured are different from each other, the corresponding points in the group are normally not located on the same plane.

(S3070) Calculation of Approximate Plane

In step S3070, the image processing apparatus 100 obtains a plane which approximates the corresponding point group in accordance with the positions of the point group (corresponding point group) included in the MRI image 601 and the lesion position xsL in the prone posture as a process performed by the approximate plane generation unit 116. Specifically, a plane (approximate plane) 720 which matches the largest number of the corresponding points xdn (n = 1 to N) in the group under constraint condition in which the plane 720 includes the lesion position xsL in the prone posture is obtained by a general plane fitting method such as the least-square method or the maximum likelihood estimation method.

(S3080) Calculation of Cross-Sectional Surface

In step S3080, the image processing apparatus 100 performs the following process as a process performed by the cross-sectional-surface generation unit 118. First, a posture of the approximate plane 720 in the MRI coordinate system 600 is obtained by means of Euler angle. Specifically, a yaw angle, a pitch angle, and a roll angle of the approximate plane 720 in the MRI coordinate system 600 are obtained. Next, a cross-sectional surface is obtained by replacing the pitch angle by 0 and the cross-sectional surface is subjected to parallel shift so that a replaced cross-sectional surface 721 including the lesion position xsL representing the lesion region 603 included in the MRI image 601 in the prone posture is obtained. By performing the process in this step described above, the replaced cross-sectional surface 721 including the lesion position 703 and a normal line which is orthogonal to the reference direction (a direction of the Y axis of the MRI coordinate system 600, that is, a direction of gravitational force) is obtained.

Here, since the replaced cross-sectional surface 721 obtained in the process described above has a degree of freedom in a position and a rotation in the surface, the image processing apparatus 100 estimates in-plane movement components of the replaced cross-sectional surface 721. Specifically, a specific range used when the cross-sectional image 722 is extracted from the replaced cross-sectional surface 721 is determined. First, the lesion position xsL included in a replaced cross-sectional surface coordinate system (a coordinate system which includes a plane which represents the replaced cross-sectional surface 721 and which is defined as an XY plane and an axis which is orthogonal to the XY plane and which is defined as a Z axis) is subjected to parallel shift in the plane so that the lesion position xsL coincide with the lesion position xiL in the ultrasonic image coordinate system 500. In this way, a position of the replacement cross-sectional surface in the plane is determined. Next, the Y axis of the replaced cross-sectional surface coordinate system is caused to be matched with the Y axis (reference direction) of the MRI coordinate system 600 so that an in-plane rotation of the replaced cross-sectional surface coordinate system is determined.

Furthermore, the image processing apparatus 100 calculates vertex coordinates of a rectangle which has vertices (-Xmin1, -Ymin1), (Xmin1, -Ymin1), (-Xmin1, Ymin1), and (Xmin1, Ymin1) and which includes all feet of perpendiculars extending from the group of corresponding points xdn to the replaced cross-sectional surface 721. Then, the rectangle is determined as the specific range used to extract the sectional image 722 in the next step. Note that the specific range may be enlarged when the operator clicks an enlargement button disposed on the monitor 206 using a mouse 205, for example, so that a larger range is specified in the replaced cross-sectional surface 721.

(S3090) Generation of Cross-Sectional Image

In step S3090, the image processing apparatus 100 generates the sectional image 722 by extracting the specific range of the replaced cross-sectional surface 721 calculated in step S3080 from the MRI image 601 as a process performed by the cross-sectional-image obtaining unit 120. Here, since a general method for generating an image in a specific range in a specified plane from a 3D image is used, a detailed description thereof is omitted.

(S3100) Image Synthesis

In step S3100, the image processing apparatus 100 generates an image including the ultrasonic tomography image 501 and the sectional image 722 which are arranged adjacent to each other as shown in the lower portion in Fig. 7 as a process performed by the image synthesizing unit 122 and displays the image in the monitor 206.

(S3110) End?

In step S3110, the image processing apparatus 100 determines whether the entire process is to be terminated. For example, the operator clicks an end button disposed on the monitor 206 so as to input a determination of the end of the process. When the determination is affirmative, the entire process of the image processing apparatus 100 is terminated. On the other hand, when the determination is negative, the process returns to step S3010 and the process from step S3010 to step S3100 is executed again on an ultrasonic tomography image 501 and position and posture data of the probe 411 which are newly obtained.

In this way, the process of the image processing apparatus 100 is performed.

As described above, in the image processing apparatus of this embodiment, an image of a cross-sectional surface including a lesion position of an MRI image can be displayed in accordance with a reference direction (so that a direction of gravitational direction corresponds to a downward direction) irrespective of a posture of a probe. As a result, the positional relationship between an image of the cross-sectional surface of the MRI image and a target object can be easily recognized.

Note that, although the case where a breast of a human body is set as a target object has been described as an example in this embodiment, embodiments of the present invention are not limited to this and a target object may be arbitrarily determined. Furthermore, although the case where a lesion position specified in an MRI image is determined as a target position has been described as an example in this embodiment, the embodiments of the present invention are not limited to this and a center position of a region representing a scar of treatment at biopsy in an MRI image or a center position of a region representing a hematoma may be determined as a target position, for example.

Second Embodiment

In a second embodiment, an ultrasonic corresponding cross-sectional image is generated when an inclination of an ultrasonic tomography image relative to a direction of gravitational force is equal to or larger than a predetermined angle. A system configuration is the same as that of the first embodiment, and therefore, a description thereof is omitted.

In the first embodiment, the case where the yaw angle, the pitch angle, and the roll angle of the approximate plane are obtained and the pitch angle is replaced by 0 so that the replaced cross-sectional surface is obtained has been described as an example. However, embodiments of the present invention are not limited to this, and a pitch angle is not replaced by 0 when a degree of inclination relative to a reference direction (a direction of gravitational force) of an ultrasonic tomography image is larger than a predetermined threshold value (45 degrees, for example). In this case, an approximate plane generation unit 116 and a cross-sectional-surface generation unit 118 generate only a 2D MRI cross-sectional image of a cross-sectional surface which corresponds to an image capturing cross-sectional surface of an ultrasonic image, which includes a specified position, and which includes a corresponding cross-sectional surface (and other corresponding cross-sectional surfaces) which is parallel to the image capturing cross-sectional surface.

On the other hand, when the degree of the inclination of the ultrasonic image relative to the reference direction is equal to or smaller than the predetermined threshold value, the process of the first embodiment is performed. According to this modification, when an inclination of an ultrasonic tomography image relative to a reference direction is large, the relationship between the ultrasonic tomography image and the cross-sectional surface corresponding to the image capturing surface of the ultrasonic image is prevented from being complicated.

Third Embodiment

In a third embodiment, a prone-posture MRI image, a supine-posture deformed MRI image, and an US (ultrasonic) image are displayed in an aligned manner. A system configuration is the same as that of the first embodiment, and therefore, a description thereof is omitted.

In the first embodiment, although the case where the cross-sectional image of the MRI image in the prone posture is generated and the generated image is displayed along with the ultrasonic tomography image in an aligned manner has been described as an example, embodiments of the present invention are not limited to this. For example, an MRI image in a supine posture may be generated from an MRI image 601 in a prone posture in accordance with a physical conversion rule and a cross-sectional image of a range of an ultrasonic tomography image 501 may be generated, and the generated image may be displayed along with a cross-sectional image of the MRI image 601 and an ultrasonic tomography image in an aligned manner.

Fourth Embodiment

In a fourth embodiment, an MRI image in a supine posture and an MRI image other than an MRI image in a prone posture or an MRI image which is not deformed by the gravity but deformed by pressure of a coil, pressure of a probe, or the like are displayed. A system configuration is the same as that of the first embodiment, and therefore, a description thereof is omitted.

Although the case where the breast is in the supine state relative to the direction of gravitational force in the first deformation state whereas the breast is in the prone state relative to the direction of gravitational force in the second deformation state has been described as an example in the first embodiment, embodiments of the present invention are not limited to this. First and second deformation states are not limited to a supine posture and a prone posture but may be an arbitrary state including a sideways posture, a standing posture, and a sitting posture. Furthermore, the first and second deformation states may be the same as each other.

Moreover, the deformation states may be different from each other owing to not only the direction of gravitational force but also pressure of a mammo coil, not shown, used for an MRI image capturing or pressure of a probe 411 onto a breast at a time of ultrasonic image capturing. When the deformation is generated owing to the pressure of the prove 411 onto the breast, a distance measurement apparatus capable of measuring a shape of the breast which gradually changes is used.

Fifth Embodiment

In a fifth embodiment, images other than an MRI image and a US (ultrasonic) image are displayed. A system configuration is the same as that of the first embodiment, and therefore, a description thereof is omitted.

Although the case where the MRI apparatus is used as the second image capturing apparatus 182 has been described as an example in the first embodiment, embodiments of the present invention are not limited to this. For example, an X-ray CT apparatus, a photoacoustic tomography apparatus, an OCT apparatus, a PET/SPECT, or a 3D ultrasonic apparatus may be used.

Sixth Embodiment

In a sixth embodiment, an image rotated relative to a center of the image, for example, is displayed. A system configuration is the same as that of the first embodiment, and therefore, a description thereof is omitted.

Although the case where the replaced cross-sectional surface including the lesion position is calculated has been described as an example in the first embodiment, embodiments of the present invention are not limited to this and a replaced cross-sectional surface may be calculated independently from a lesion position. In this case, step S3005 and step S3045 are not required. Furthermore, z coordinates of grid points set in step S3050 are not changed, that is, 0. Then, in step S3070, an approximate plane is calculated without a constraint condition in which the approximate plane includes a lesion position. Furthermore, when a cross-sectional surface is calculated in step S3080, a foot of a perpendicular extending from a corresponding point of an origin of an ultrasonic image coordinate system 500 is determined as a replaced cross-sectional surface coordinate system.

Seventh Embodiment

In a seventh embodiment, not only replacement of a pitch angle (tilt angle) by 0 degree but also replacement of a yaw angle by 0 degree is performed. A system configuration is the same as that of the first embodiment, and therefore, a description thereof is omitted.

In the first embodiment, the case where the yaw angle, the pitch angle, and the roll angle of the approximate plane in the MRI coordinate system 600 are obtained and the pitch angle is replaced by 0 so that the replaced cross-sectional surface in the MRI coordinate system 600 is obtained has been described as an example. However, embodiments of the present invention are not limited to this. The yaw angle may be also replaced by 0 so that a replaced cross-sectional surface which is parallel to an original tomography image obtained when an MRI image 601 is captured is calculated. In this embodiment, a mode in which the yaw angle is not replaced by 0 may be switched to a mode in which the yaw angle is replaced by 0 when an operator specifies a candidate position in the ultrasonic tomography image 501 which corresponds to a lesion position in the MRI image 601, for example. In this case, a position specifying unit 123 capable of specifying an arbitrary position in an ultrasonic image specifies the candidate position in response to an input from an operation unit 188. A display controller 124 displays an obtained cross-sectional image in a display unit 186 when the position specifying unit 123 specifies the candidate position. In this way, the display controller 124 changes display in the display unit 186. In this case, it can be determined whether the corresponding lesion candidate specified in the ultrasonic tomography image 501 is the same lesion as that specified in the MRI image 601 by referring back to the tomography image obtained when the MRI image 601 is captured. Furthermore, the mode in which the yaw angle is replaced by 0 may be switched to the mode in which the yaw angle is not replaced by 0 of this embodiment when the operator cancels the specifying of the candidate position. Specifically, a setting of a cross-sectional surface may be changed in accordance with a state of an obtainment of a position corresponding to a lesion position.

Eighth Embodiment

In an eighth embodiment, a direction other than a direction of gravitational force is determined as a reference direction. A system configuration is the same as that of the first embodiment, and therefore, a description thereof is omitted.

Although the case where the direction of gravitational force is determined as the reference direction has been described as an example in the first embodiment, embodiments of the present invention are not limited to this. For example, a direction from a nipple 606 to a center of a lesion region 603 in an MRI image 601 may be determined as a reference direction. By this, a cross-sectional image reliably includes a lesion region and a nipple. Accordingly, a cross-sectional image of the MRI image 601 corresponding to an ultrasonic tomography image 501 can be displayed for a doctor so that the doctor can easily recognize the positional relationship between the cross-sectional image and a target object.

As another example, a cross-sectional-surface generation unit 118 functions as a setting unit which sets a reference direction in accordance with a photographing body posture obtained when an MRI image is captured. For example, when an MRI image is obtained by capturing an image of a subject in a prone posture or a supine posture, a direction of gravitational force may be determined as a reference direction whereas when an MRI image or a CT image is obtained by capturing an image of the subject in a standing posture or a sitting posture, a body axis may be determined as a reference direction.

By obtaining a cross-sectional image constituted by a corresponding cross-sectional surface which includes a position which is specified in advance and which is parallel to the reference direction, it become easy to retrieve and recognize a position which is specified using the image, and in addition, it becomes easy to recognize the positional relationship between an inspection target and the image. In this way, a person who performs inspection can easily perform detailed examination.

(Other Embodiments) Although the case where the present invention is applied to an ultrasonic photographing apparatus which captures an image of a living body as a subject has been described as an example in the foregoing embodiments, embodiments of the present invention are not limited to this, and the present invention is applicable to an ultrasonic photographing apparatus which performs nondestructive inspection on an object other than living bodies.

Furthermore, although the corresponding cross-sectional surface is generated taking the state of deformation of the subject caused by different photographing body postures into consideration, the present invention is applicable to a case where a subject which is not deformed is photographed.

An apparatus which integrally has functions of the image processing apparatus 100 and the ultrasonic image capturing apparatus may be provided. In this case, a term "obtainment" of an ultrasonic image or an MRI image by an image processing apparatus includes meaning of an obtainment of an ultrasonic image by image capturing.

Although the corresponding cross-sectional surface is parallel to the plane obtained by replacing an angle defined by the corresponding cross-sectional surface and the reference direction by 0 degree as described above, it is not necessarily the case that the angle is precisely 0 degree and a little amount of error may be accepted (i.e. substantially 0 degrees). That is, the image should be recognized as an image along the reference direction when viewed by a user. The angle may be precisely 0 degree. Furthermore, also in terms of parallelism, a small amount of error which does not affect the person who performs inspection is accepted. As for the term "orthogonal" and the term "coincident" similarly include tolerance.

The "obtainment" of the cross-sectional image included in the corresponding cross-sectional surface performed by the image processing apparatus 100 as described in the foregoing embodiments includes transmission of information on the corresponding cross-sectional surface to an external image processing apparatus which has a 3D image and an obtainment of a cross-sectional image in response to the transmission.

The present invention may be realized as other embodiments such as a system, an apparatus, a method, a program, and a storage medium. Specifically, the present invention is applicable to a system including a plurality of apparatuses having functions of an image processing apparatus in a distributed manner or applicable to a single apparatus.

A program code which is installed in a computer to realize the functions and the processes of the present invention by the computer also realizes the present invention.

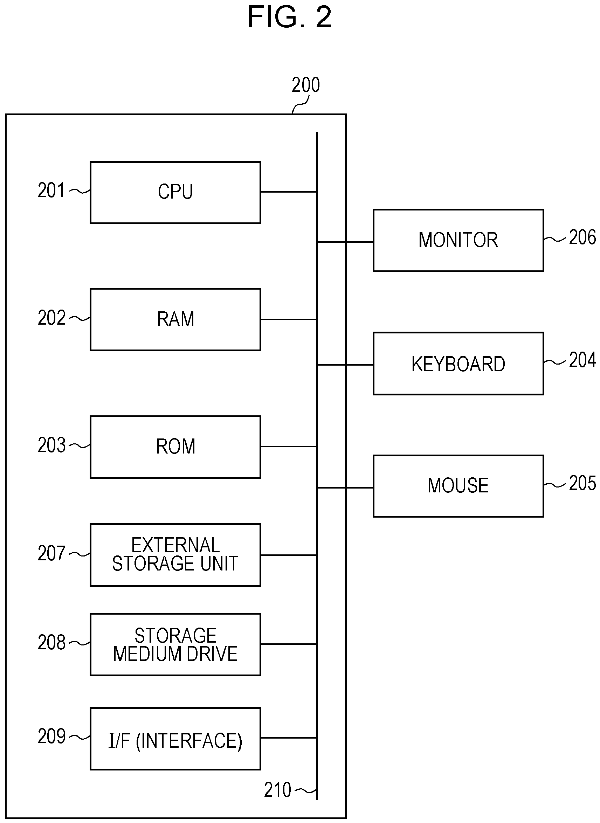

Fig. 2 is a diagram illustrating a configuration of hardware for realizing functions of units shown in Fig. 1 by operating software and hardware in combination. An image processing apparatus 200 includes a CPU 201, a RAM 202, a ROM 203, a storage unit 207, a storage medium drive 208, and an I/F 209 and is connected to a keyboard 204, a mouse 205, and a monitor 206.

The CPU 201 controls the entire computer using programs and data which are stored in the RAM 202 and the ROM 203 and which are used to realize the processes shown in Fig. 3 described above. Furthermore, the CPU 201 controls execution of the software in the units so as to realize the functions of the units. The RAM 202 includes an area which temporarily stores the programs and the data which realize the process shown in Fig. 3 described above and which are loaded from the storage unit 207 and the storage medium drive 208 and further includes a work area used by the CPU 201 to perform various processes. The ROM 203 generally stores programs and setting data of a computer. The keyboard 204 and the mouse 205 are input devices and an operator inputs various instructions to the CPU 201 using the keyboard 204 and the mouse 205.

The monitor 206 is constituted by a CRT or a liquid crystal display and displays an ultrasonic tomography image, a cross-sectional image, and the like. Furthermore, the monitor 206 can display messages to be displayed, GUIs, and the like.

The storage unit 207 functions as a large capacity information storage unit such as a hard disk drive, and stores programs used to realize the processes shown in Fig. 3 as described above which are executed by an OS (operating system) and the CPU 201. Moreover, "general information" described in this embodiment is stored in the storage unit 207 and the information is loaded to the RAM 202 where appropriate.

The storage medium drive 208 reads programs and data stored in a storage medium such as a CD-ROM or a DVD-ROM in response to an instruction issued by the CPU 201 and supplies the programs and the data to the RAM 202 or the storage unit 207.

The I/F 209 includes a digital input/output port such as an analog video port or the IEEE1394 and an Ethernet port used to output various information to the outside. The input data is supplied to the RAM 202 through the I/F 209. Some of the functions of the tomography image obtaining unit 102, the position/posture obtaining unit 104, the 3D-image obtaining unit 106, and the target point specifying unit 107 are realized by the I/F 209. The components described above are connected to one another through a bus 210.

As mentioned above, aspects of the present embodiment can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

An embodiment of the invention can provide an image processing apparatus (100) comprising: ultrasonic image obtaining means (102) for obtaining an ultrasonic image by capturing a subject by ultrasound; generation means (118) arranged to generate a corresponding cross-sectional surface which corresponds to an image capturing cross-sectional surface of the ultrasonic image, which is substantially parallel to a reference direction, and which includes a target position specified in advance from a three-dimensional image of the subject; and cross-sectional image obtaining means (120) arranged to obtain a cross-sectional image of the three-dimensional image from the generated corresponding cross-sectional surface.

Preferably, the generation means (118) is arranged to newly generate a corresponding cross-sectional surface in accordance with a change of the image capturing cross-sectional surface by rotating the corresponding cross-sectional surface in accordance with a rotation of the image capturing cross-sectional surface relative to an axis extending in the reference direction.

Preferably, the generation means (118) is arranged to newly generate a corresponding cross-sectional surface in accordance with a change of the image capturing cross-sectional surface by rotating the corresponding cross-sectional surface in accordance with a rotation of the image capturing cross-sectional surface relative to an axis extending in the reference direction, the corresponding cross-sectional surface newly generated being not rotated in accordance with a movement of inclination of the image capturing cross-sectional surface relative to the reference direction.

Preferably, the generation means (118) is arranged to generate the corresponding cross-sectional surface which is substantially parallel to the reference direction, which includes the target position specified in advance, and which has a line which intersects with the image capturing cross-sectional surface of the ultrasonic image and which is substantially orthogonal to the reference direction.

Preferably, the generation means (118) is arranged to determine whether the corresponding cross-sectional surface is to be generated in accordance with an angle defined by the reference direction and the captured ultrasonic image.

Preferably, the generation means is arranged to generate the corresponding cross-sectional surface when the angle defined by the reference direction and the obtained ultrasonic image is equal to or smaller than a threshold value whereas the generation means is arranged not to generate the corresponding cross-sectional surface when the angle is larger than the threshold value.

Preferably, the generation means (118) is arranged to generate, when the corresponding cross-sectional surface is not to be generated, another corresponding cross-sectional surface which is substantially parallel to a plane including the ultrasonic image and which includes a target position specified in advance, and the cross-sectional image obtaining means (120) is arranged to obtain a cross-sectional image of the other corresponding cross-sectional surface from the three-dimensional image of the subject.

Preferably, the image processing apparatus further comprises: display control means (124) arranged to display the ultrasonic image and the cross-sectional image.

Preferably, the display control means (124) is arranged to change a cross-sectional image to be displayed in accordance with an angle defined by the reference direction and the ultrasonic image.

Preferably, the image processing apparatus further comprises: display control means (124) arranged to display a first MRI cross-sectional image of another corresponding cross-sectional surface which is a three-dimensional MRI image obtained by converting a three-dimensional MRI image of a prone posture into a three-dimensional MRI image of a supine posture, which is substantially parallel to the ultrasonic image, and which includes a target position specified in advance and display a second MRI cross-sectional image of the generated corresponding cross-sectional surface in an aligned manner.

Preferably, the image processing apparatus further comprises: setting means (118) arranged to set the reference direction in accordance with a body posture of the subject obtained when a three-dimensional image of the subject is photographed.

Preferably, the cross-sectional image is obtained by photographing the subject in a prone posture and the ultrasonic image is obtained by photographing the subject in a posture other than the prone posture.

Preferably, the image processing apparatus further comprises: specifying means (123) configured to specify an arbitrary position in the ultrasonic image.

Preferably, the image processing apparatus further comprises: display control means (124) configured to display the obtained cross-sectional image in accordance with the specifying performed by the specifying means.

Another embodiment of the invention can provide an image processing method comprising: obtaining an ultrasonic image by capturing a subject by ultrasound; generating a corresponding cross-sectional surface which corresponds to an image capturing cross-sectional surface of the ultrasonic image, which is substantially parallel to a reference direction, and which includes a target position specified in advance from a three-dimensional image of the subject; and obtaining a cross-sectional image of the three-dimensional image from the generated corresponding cross-sectional surface.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus (1) comprising:

three-dimensional image obtaining means (182) arranged to obtain a prone-posture three-dimensional image by photographing a subject in a prone posture using a three-dimensional photographing apparatus and obtain a supine-posture three-dimensional image by deforming the prone-posture three-dimensional image; ultrasonic image obtaining means (102) for successively obtain two-dimensional ultrasonic images obtained by photographing a subject in a supine posture using an ultrasonic photographing apparatus (180); generation means (118) arranged to generate, in accordance with an image capturing cross-sectional surface of an obtained two-dimensional ultrasonic image: a first cross-sectional surface of the supine-posture three-dimensional image which includes a target position, specified in advance using the prone-posture three-dimensional image, and which is substantially parallel to the image capturing cross-sectional surface of the two-dimensional ultrasonic image; and a second cross-sectional surface of the prone-posture three-dimensional image obtained by replacing an angle defined by a reference direction and the first cross-sectional surface by approximately 0 degrees;

cross-sectional image obtaining means (120) arranged to obtain from the supine-posture three-dimensional image a first cross-sectional image associated with the first cross-sectional surface and to obtain from the prone-posture three-dimensional image a second cross-sectional image associated with the second cross-sectional surface; and

display control means (124) arranged to display the ultrasonic image, the first cross-sectional image, and the second cross-sectional image in an aligned manner.

2. The image processing apparatus according to claim 1,
wherein the generation means (118) is arranged to newly generate the first cross-sectional surface in accordance with a change of the image capturing cross-sectional surface of the obtained two-dimensional ultrasonic image by rotating the first cross-sectional surface in accordance with a rotation of the image capturing cross-sectional surface relative to an axis extending in the reference direction.

3. The image processing apparatus according to claim 1 or 2,
wherein the generation means (118) is arranged to determine whether the first cross-sectional surface is to be generated in accordance with an angle defined by the reference direction and the obtained two-dimensional ultrasonic image.

4. The image processing apparatus according to claim 3,
wherein the generation means is arranged to generate the first cross-sectional surface when the angle defined by the reference direction and the obtained ultrasonic image is equal to or smaller than a threshold value whereas the generation means is arranged not to generate the first cross-sectional surface when the angle is larger than the threshold value.

5. The image processing apparatus according to claim 4,
wherein the generation means (118) is arranged to generate, when the first cross-sectional surface is not to be generated, another cross-sectional surface which is substantially parallel to a plane including the ultrasonic image and which includes the target position specified in advance, and the cross-sectional image obtaining means (120) is arranged to obtain from the supine-posture three-dimensional image a cross-sectional image associated with the another cross-sectional surface.

6. The image processing apparatus according to any preceding claim,
wherein the display control means (124) is arranged to change a cross-sectional image to be displayed in accordance with an angle defined by the reference direction and the obtained two-dimensional ultrasonic image.

7. The image processing apparatus according to any preceding claim, wherein the display control means (124) is arranged to display a first MRI cross-sectional image associated with the first cross-sectional surface and to display a second MRI cross-sectional image associated with the second cross-sectional surface in an aligned manner, wherein said first MRI cross-sectional image being obtained by the cross-sectional image obtaining means from the supine-posture three-dimensional image and said second MRI cross-sectional image being obtained by the cross-sectional image obtaining means from the prone-posture three-dimensional image.

8. The image processing apparatus according to any one of claims 1 to 7, further comprising:

setting means (118) arranged to set the reference direction in accordance with a body posture of the subject obtained when a three-dimensional image of the subject is photographed.

9. The image processing apparatus according to any one of claims 1 to 8, further comprising:

specifying means (123) configured to specify an arbitrary position in the ultrasonic image.

10. The image processing apparatus according to claim 9, wherein the display control means (124) is configured to display the obtained cross-sectional image in accordance with the specifying performed by the specifying means.

11. The image processing apparatus according to any one of claims 1 to 10,
wherein the reference direction corresponds to a direction of gravitational force.

12. The image processing apparatus according to any one of claims 1 to 11,
wherein the target position specified in advance is one of a position of a lesion, a position of a region representing a scar and a region representing a hematoma.

**13.** An ultrasonic photographing system comprising:

the image processing apparatus (100) according to any one of claims 1 to 12;
display means (186) arranged to display the ultrasonic image and the cross-sectional image; and
ultrasonic means (180) arranged to obtain the ultrasonic image by photographing the subject.

**14.** An image processing method comprising:

obtaining a prone-posture three-dimensional image by photographing a subject in a prone posture using a three-dimensional photographing apparatus and obtaining a supine-posture three-dimensional image by deforming the prone-posture three-dimensional image;
successively obtaining two-dimensional ultrasonic images obtained by photographing a subject in a supine posture using an ultrasonic photographing apparatus (180);
generating, in accordance with an image capturing cross-sectional surface of an obtained two-dimensional ultrasonic image: a first cross-sectional surface of the supine-posture three-dimensional image which includes a target position, specified in advance using the prone-posture three-dimensional image, and which is substantially parallel to the image capturing cross-sectional surface of the two-dimensional ultrasonic image; and a second cross-sectional surface of the prone-posture three-dimensional image obtained by replacing an angle defined by a reference direction and the first cross-sectional surface by approximately 0 degrees;
obtaining from the supine-posture three-dimensional image a first cross-sectional image associated with the first cross-sectional surface and obtaining from the prone-posture three-dimensional image a second cross-sectional image associated with the second cross-sectional surface; and
displaying the ultrasonic image, the first cross-sectional image, and the second cross-sectional image in an aligned manner.

**15.** A program which, when executed by a computer in an image processing apparatus, causes the image processing apparatus to carry out the method of claim 14.

**16.** A program which, when loaded into a computer of an image processing apparatus, causes the image processing apparatus to function as the image processing apparatus of any one of claims 1 to 12.

**17.** A storage medium storing the computer program according to claim 15 or 16.

# FIG. 1

# FIG. 2

200

201 — CPU

202 — RAM

203 — ROM

207 — EXTERNAL STORAGE UNIT

208 — STORAGE MEDIUM DRIVE

209 — I/F (INTERFACE)

210

MONITOR — 206

KEYBOARD — 204

MOUSE — 205

# FIG. 3

```
                    ┌──────────────┐
                    │    START     │
                    └──────┬───────┘
                           ▼
       ┌───────────────────────────────────────────┐
       │            OBTAIN MRI IMAGE               │──── S3000
       └───────────────────┬───────────────────────┘
                           ▼
       ┌───────────────────────────────────────────┐
       │           SPECIFY TARGET POINT            │──── S3005
       └───────────────────┬───────────────────────┘
                           ▼
       ┌───────────────────────────────────────────┐
       │      OBTAIN ULTRASONIC TOMOGRAPHY IMAGE   │──── S3010
       └───────────────────┬───────────────────────┘
                           ▼
       ┌───────────────────────────────────────────┐
       │        OBTAIN PROBE POSITION/POSTURE      │──── S3020
       └───────────────────┬───────────────────────┘
                           ▼
       ┌───────────────────────────────────────────┐
       │             CALCULATE SHAPE               │──── S3030
       └───────────────────┬───────────────────────┘
                           ▼
       ┌───────────────────────────────────────────┐
       │     CALCULATE PHYSICAL CONVERSION RULE    │──── S3040
       └───────────────────┬───────────────────────┘
                           ▼
       ┌───────────────────────────────────────────┐
       │           CONVERT TARGET POINT            │──── S3045
       └───────────────────┬───────────────────────┘
                           ▼
       ┌───────────────────────────────────────────┐
       │        CALCULATE GRID-POINT GROUP         │──── S3050
       └───────────────────┬───────────────────────┘
                           ▼
       ┌───────────────────────────────────────────┐
       │    CALCULATE CORRESPONDING-POINT GROUP    │──── S3060
       └───────────────────┬───────────────────────┘
                           ▼
       ┌───────────────────────────────────────────┐
       │        CALCULATE APPROXIMATE PLANE        │──── S3070
       └───────────────────┬───────────────────────┘
                           ▼
       ┌───────────────────────────────────────────┐
       │      GENERATE CROSS-SECTIONAL SURFACE     │──── S3080
       └───────────────────┬───────────────────────┘
                           ▼
       ┌───────────────────────────────────────────┐
       │       OBTAIN CROSS-SECTIONAL IMAGE        │──── S3090
       └───────────────────┬───────────────────────┘
                           ▼
       ┌───────────────────────────────────────────┐
       │             IMAGE SYNTHESIS               │──── S3100
       └───────────────────┬───────────────────────┘
                           ▼
              NO       ◇─────────◇
       ◄───────────────│  END?   │──── S3110
                       ◇─────────◇
                           │ YES
                           ▼
                    ┌──────────────┐
                    │     END      │
                    └──────────────┘
```

# FIG. 4

CONNECTED TO ULTRASONIC APPARATUS

184

420

411

412

410

406

400

401

403

404

405   405

EP 2 506 221 A2

# FIG. 5

# FIG. 6

# FIG. 7

EP 2 506 221 A2

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003260056 A

**Non-patent literature cited in the description**

- **Y. HU ; D. MORGAN ; H. U. AHMED ; D. PENDSE ; M. SAHU ; C. ALLEN ; M. EMBERTON ; D. HAWKES.** A statistical motion model based on biomechanical simulations. *proc. miccai 2008, Part I, LNCS,* 2008, vol. 5241, 737-744